(19) Europäisches Patentamt
European Patent Office
Office européen des brevets

(11) EP 0 606 634 B1

(12) **EUROPÄISCHE PATENTSCHRIFT**

(45) Veröffentlichungstag und Bekanntmachung des Hinweises auf die Patenterteilung:
**18.09.1996 Patentblatt 1996/38**

(51) Int Cl.[6]: **C08G 77/38**

(21) Anmeldenummer: **93120691.6**

(22) Anmeldetag: **23.12.1993**

(54) **Mit Estern olefinisch ungesättigter Säuren sowie quaternären Ammoniumgruppen modifizierte Organopolysiloxane, deren Herstellung und Verwendung**

Organopolysiloxane modified with unsaturated acid esters and quarternary ammonium groups, their preparation and use

Organopolysiloxane, modifié avec esters d'acide insaturés et groupes quaternaires d'ammonium, leur préparation et usage

(84) Benannte Vertragsstaaten:
**DE FR GB IT**

(30) Priorität: **08.01.1993 DE 4300267**

(43) Veröffentlichungstag der Anmeldung:
**20.07.1994 Patentblatt 1994/29**

(73) Patentinhaber: **Th. Goldschmidt AG**
**D-45127 Essen (DE)**

(72) Erfinder:
- **Klein, Klaus-Dieter, Dr.**
  **D-45468 Mülheim (DE)**
- **Krakenberg, Manfred**
  **D-45276 Essen (DE)**
- **Lersch, Peter, Dr.**
  **D-46119 Oberhausen (DE)**
- **Schaefer, Dietmar, Dr.**
  **D-45529 Hattingen (DE)**

(56) Entgegenhaltungen:
**EP-A- 0 161 888** **EP-A- 0 186 424**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

**Beschreibung**

Die Erfindung betrifft Organopolysiloxane mit über jeweils eine Spacergruppe end- und/oder seitenständig gebundenen Estern olefinisch ungesättigter Säuren sowie quaternären Ammoniumgruppen. Die Erfindung betrifft ferner ein Verfahren zur Herstellung dieser Verbindungen sowie deren Verwendung als Mittel zur Einstellung des Releaseverhaltens abhäsiver Beschichtungen auf Basis strahlenhärtender Polymere.

Organopolysiloxane mit über SiC-Gruppen gebundenen (Meth)acrylsäureestergruppen werden in größerem Umfang als strahlungshärtbare abhäsive Beschichtungsmittel für flächige Träger verwendet. Sie werden beispielsweise zur Beschichtung von Papieren oder Folien eingesetzt, welche als Träger für selbstklebende Etiketten dienen. Die mit einem Haftkleber versehenen Etiketten haften auf der beschichteten Oberfläche noch in genügendem Maße, um die Handhabung der die Klebeetiketten aufweisenden Trägerfolien zu ermöglichen. Die Etiketten müssen aber von der beschichteten Trägerfolie abziehbar sein, ohne daß ihre Klebkraft für die spätere Verwendung wesentlich beeinträchtigt wird. Weitere Anwendungsmöglichkeiten für abhäsive Beschichtungsmassen sind Verpackungspapiere, die insbesondere zur Verpackung von klebrigen Gütern dienen. Derartige abhäsive Papiere oder Folien werden zum Beispiel zum Verpacken von Lebensmitteln oder zum Verpacken technischer Produkte, wie z.B. Bitumen, verwendet.

Solche Beschichtungsmassen auf Basis von mit (Meth)acrylsäureestern modifizierten Organopolysiloxanen sollen die folgende Eigenschaftskombination aufweisen:

1. befriedigende Haftung auf dem jeweils zu beschichtenden Träger
2. hohe Aushärtungsgeschwindigkeit auf dem Träger
3. chemische und physikalische Beständigkeit der ausgehärteten Beschichtung
4. hohe Flexibilität der ausgehärteten Beschichtung
5. abhäsive Eigenschaften gegenüber den klebenden Produkten und Anpassung dieser Eigenschaften an den chemischen Charakter des Klebstoffes
6. Einstellbarkeit des gewünschten Grades der Abhäsivität.

Aus der umfangreichen Patentliteratur können zum Stand der Technik die folgenden Patentschriften genannt werden:

EP-PS 0 281 681:

In dieser Patentschrift werden Polysiloxane mit über SiC-Gruppen gebundenen (Meth)acrylsäureestergruppen beansprucht, welche erhältlich sind durch Umsetzung von epoxyfunktionellen Polysiloxanen der allgemeinen Formel

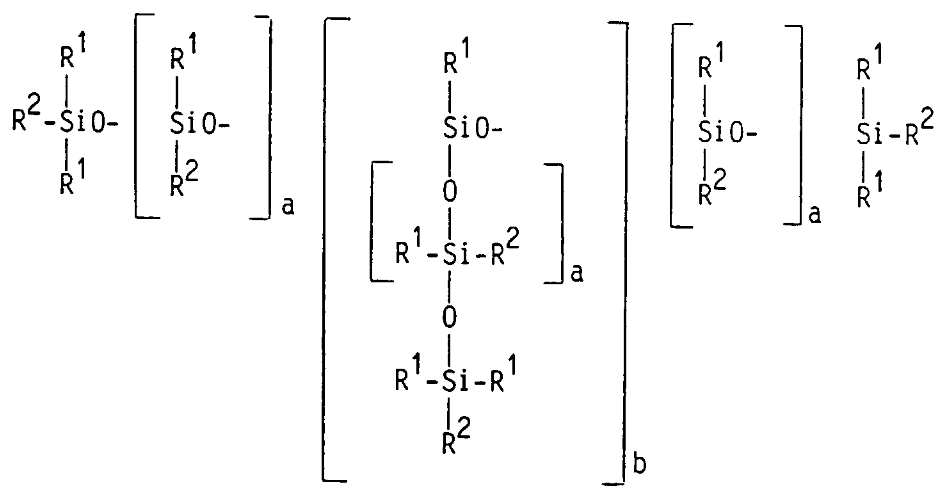

wobei

$R^1$ gleiche oder verschiedene niedere Alkylreste mit 1 bis 4 Kohlenstoffatomen oder Phenylreste sind,
$R^2$ gleich $R^1$ oder den Rest $R^3$ bedeutet, wobei die Reste $R^3$
zu 70 bis 100 % epoxyfunktionelle Reste und
zu 30 bis 0 % Alkylreste mit 2 bis 10 Kohlenstoffatomen oder Wasserstoffreste sind,
mit der Maßgabe, daß im durchschnittlichen Molekül mindestens 1,5 Epoxygruppen enthalten sind,
a einen Wert von 1 bis 1000 und
b einen Wert von 0 bis 10 hat,

mit solchen Mengen eines Säuregemisches, bestehend aus 10 bis 90 Mol-% (Meth)acrylsäureanhydrid und 90 bis 10 Mol-% (Meth)acrylsäure, wobei die Summe 100 Mol-% ergeben muß, daß auf n Epoxidäquivalente 0,8 bis 1,9 n Säureäquivalente entfallen, bei erhöhten Temperaturen, gegebenenfalls in Gegenwart von Lösungsmitteln und üblichen Veresterungskatalysatoren.

Die in der EP-PS 0 281 681 beschriebenen modifizierten Organopolysiloxane weisen - je nach Zusammensetzung des Gemisches, bestehend aus (Meth)acrylsäureanhydrid und (Meth)acrylsäure und eingesetzter Menge des Gemisches (bezogen auf Epoxidgruppen) - vorbestimmbare Mengen (Meth)acrylsäurediester-, (Meth)acrylsäuremonoester-, Hydroxyl- und, gegebenenfalls, nicht umgesetzte Epoxidgruppen auf. Da es sich gezeigt hat, daß die Abhäsivität mit steigender Anzahl (Meth)acrylsäureestergruppen zunimmt, die Verträglichkeit mit dem Untergrund sich jedoch mit steigendem Gehalt an Hydroxyl- und gegebenenfalls Epoxidgruppen verbessert, gelingt es in einfacher Weise, diese einander gegenläufigen Eigenschaften in ein ausgewogenes, anwendungstechnisch erwünschtes Verhältnis zu bringen.

Durch das Verhältnis der Mono- und Diestergruppen kann ferner die Vernetzungsdichte der ausgehärteten Siloxane beeinflußt werden. Unterschiede in der Vernetzungsdichte ergeben unterschiedliche physikalische Eigenschaften, wie Erhöhung der Härte und der mechanischen Widerstandsfähigkeit bei Erhöhung der Vernetzungsdichte; Absenken des Glaspunktes und Elastifizierung bei Herabsetzung der Vernetzungsdichte.

Eine weitere Beeinflussungsmöglichkeit der abhäsiven Eigenschaften ist dadurch gegeben, daß bis zu 30 % der Reste $R^3$ gegebenenfalls substituierte Alkylreste mit 2 bis 20 Kohlenstoffatomen sein können. Durch die Anwesenheit der Alkylreste mit 2 bis 20 Kohlenstoffatomen wird der organische Charakter der modifizierten Polysiloxane erhöht. Dabei kann man im allgemeinen davon ausgehen, daß sowohl mit steigendem Gehalt an Alkylresten als auch mit steigender Länge der Kette der Alkylreste die abhäsiven Eigenschaften des Polysiloxans gezielt vermindert werden können.

DE-PS 38 10 140:

Der Patentschrift ist die Verwendung von Polysiloxanen mit über SiC-Gruppen gebundenen (Meth)acrylsäureestergruppen zu entnehmen, welche erhältlich sind durch Umsetzung von Polysiloxanen der allgemeinen durchschnittlichen Formel

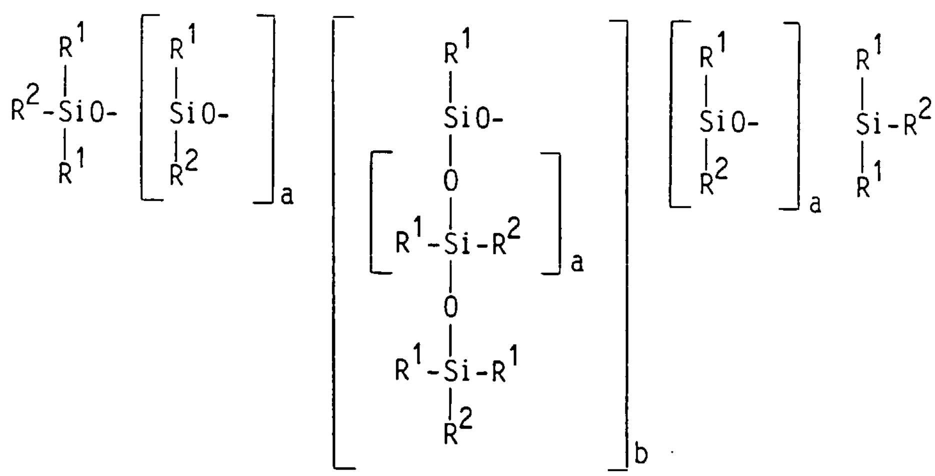

wobei

die Reste $R^1$ gleich oder verschieden sind und jeweils niedere Alkylreste mit 1 bis 4 Kohlenstoffatomen oder Phenylreste bedeuten,

die Reste $R^2$ zu einem Teil die Bedeutung der Reste $R^1$ haben können und die übrigen Reste $R^2$ zu 70 bis 100 % hydroxyfunktionelle Reste der Formel

$$-CH_2(CR^3_2)_n -(OCH_2CHR^4)_m-OH, -CH=CH-CR^3_2-OH$$

und/oder Reste der Formel

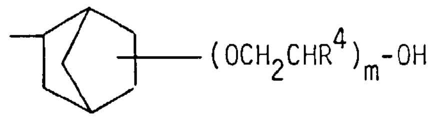

wobei die Reste

- $R^3$ gleich oder verschieden sind und jeweils einen H-oder Alkylrest mit 1 bis 4 Kohlenstoffatomen bedeuten,
- $R^4$ gleich oder verschieden sind und jeweils einen H-oder Alkylrest mit 1 bis 10 Kohlenstoffatomen bedeuten,

und die Indices
n = 0 bis 10 und
m = 0 bis 40 sind, und
30 bis 0 % gegebenenfalls substituierte Alkylreste mit 2 bis 20 Kohlenstoffatomen und/oder Wasserstoffreste sind,
mit der Maßgabe, daß im mittleren Molekül mindestens 1,8 hydroxyfunktionelle $R^2$-Reste enthalten sind,

a einen Wert von 1 bis 1000 und
b einen Wert von 0 bis 10 hat,

mit, bezogen auf Hydroxylgruppen, 0,4- bis 0,9molaren Mengen (Meth)-acrylsäure und bis zu 0,6molaren Mengen einer Monocarbonsäure, welche frei von zur Polymerisation befähigten Doppelbindungen ist, wobei die Summe der molaren Mengen Säuren 1,0 nicht überschreiten darf, unter üblichen Veresterungsbedingungen, als strahlenhärtbare abhäsive Beschichtungsmittel.

In der DE-PS 38 10 140 wird ausgeführt, daß die Abhäsivität der patentgemäß zu verwendenden Organopolysiloxane nach ihrer Aushärtung mit der Anzahl der (Meth)acrylsäureestergruppen im Polymerenmolekül steigt. Mit der höheren Vernetzungsdichte steigt die Glastemperatur der ausgehärteten Beschichtung, die Flexibilität der Beschichtung nimmt ab. Gleichzeitig erhöht sich die chemische und physikalische Beständigkeit der ausgehärteten Beschichtung. Mit steigendem Anteil an Monocarbonsäureestergruppen, welche frei von zur Polymerisation befähigten Doppelbindungen sind, verringert sich die Abhäsivität und verbessert sich die Haftung am Träger. Diese Verringerung der Abhäsivität wird zusätzlich durch gegebenenfalls noch vorhandene Hydroxylgruppen nicht umgesetzter, hydroxyfunktioneller Gruppen $R^2$ verstärkt. Hierdurch kann auch die abhäsive Beschichtung an den chemischen Charakter des Klebstoffes angepaßt werden.

DE-PS 38 20 294:

Es werden Polysiloxane mit über SiC-Gruppen gebundenen (Meth)acrylsäureestergruppen beansprucht, welche erhältlich sind durch Umsetzung von Polysiloxanen der allgemeinen durchschnittlichen Formel

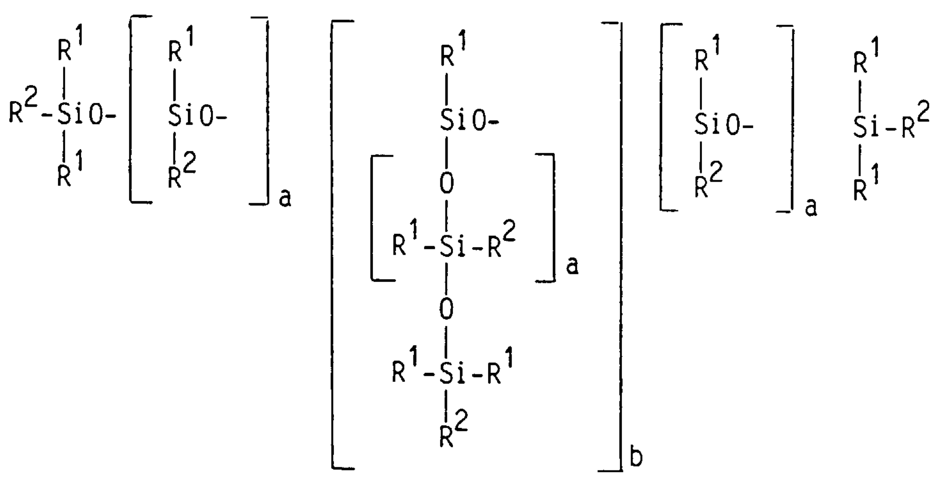

wobei

die Reste $R^1$ gleich oder verschieden sind und jeweils niedere Alkylreste mit 1 bis 4 Kohlenstoffatomen oder Phenylreste bedeuten,

die Reste $R^2$ zu einem Teil die Bedeutung der Reste $R^1$ haben können und die übrigen Reste $R^2$
zu 70 bis 100 % übliche epoxyfunktionelle Reste und
zu 30 bis 0 % Alkylreste mit 2 bis 10 Kohlenstoffatomen oder Wasserstoffreste sind,
mit der Maßgabe, daß im durchschnittlichen Molekül mindestens 1,8 Epoxygruppen enthalten sind,

a einen Wert von 1 bis 1000 und

b einen Wert von 0 bis 10 hat,

mit, bezogen auf Epoxidgruppen, 0,4- bis 0,9molaren Mengen (Meth)acrylsäure und Umsetzung der verbleibenden Epoxidgruppen mit einer Monocarbonsäure mit 2 bis 12 Kohlenstoffatomen, welche frei von zur Polymerisation befähigten Doppelbindungen ist.

Die Eigenschaften der in der DE-PS 38 20 294 beanspruchten Organopolysiloxane lassen sich nach der Lehre dieser Patentschrift auf folgende Weise einstellen:

Die Abhäsivität der patentgemäßen Organopolysiloxane nach ihrer Aushärtung steigt mit der Anzahl der (Meth) acrylsäureestergruppen im Polymerenmolekül. Mit der höheren Vernetzungsdichte steigt die Glastemperatur der ausgehärteten Beschichtung, die Flexibilität der Beschichtung nimmt ab. Gleichzeitig erhöht sich die chemische und physikalische Beständigkeit der ausgehärteten Beschichtung. Mit steigendem Anteil an Monocarbonsäureestergruppen, welche frei von zur Polymerisation befähigten Doppelbindungen sind, verringert sich die Abhäsivität und verbessert sich die Haftung am Träger. Durch die Auswahl der Monocarbonsäuren kann die abhäsive Beschichtung an den chemischen Charakter des Klebstoffes angepaßt werden. Eine weitere Beeinflussungsmöglichkeit der abhäsiven Eigenschaften ist dadurch gegeben, daß bis zu 30 % der Reste $R^2$ gegebenenfalls substituierte Alkylreste mit 2 bis 20 Kohlenstoffatomen sein können. Durch die Anwesenheit der Alkylreste mit 2 bis 20 Kohlenstoffatomen wird der organische Charakter der modifizierten Polysiloxane erhöht. Dabei kann man im allgemeinen davon ausgehen, daß sowohl mit steigendem Gehalt an Alkylresten als auch mit steigender Länge der Kette der Alkylreste die abhäsiven Eigenschaften des Polysiloxans gezielt vermindert werden können.

Die vorliegende Erfindung befaßt sich ebenfalls mit dem technischen Problem, die Eigenschaften solcher abhäsiver Organopolysiloxane mit (Meth)acrylsäureestergruppen zu beeinflussen und dadurch an den Anwendungszweck anzupassen. Die Erfindung geht dabei von der Überlegung aus, einem abhäsiven Organopolysiloxan als Basispolymeren Modifizierungsmittel zuzusetzen, die geeignet sind, die abhäsiven Eigenschaften der Basispolymeren in gezielter kontrollierter Weise zu beeinflussen.

Dieses Modifizierungsmittel soll dabei die Abhäsivität des Basispolymeren vermindern und damit reziprok die Trennkraft erhöhen. Man geht also von einem Basispolymeren hoher Abhäsivität aus und stellt die gewünschte verminderte Abhäsivität durch Zusatz des Modifizierungsmittels entsprechend den Anwendungsbedingungen ein. Derartige Produkte werden im allgemeinen als Control Release Additive (CRA) bezeichnet. Auf diese Weise sollte es gelingen, mit nur einem Basispolymeren oder allenfalls einer kleinen Palette verschiedener Basispolymeren durch geeignete Auswahl eines entsprechenden Modifizierungsmittels ein für den vorgesehenen Anwendungszweck optimales Produktgemisch zu erhalten, wobei das Modifizierungsmittel spätestens unter den Bedingungen der Aushärtung in das Basispolymere eingebaut wird. Es entfällt damit die Notwendigkeit, für jeden speziellen Anwendungszweck ein spezielles Basispolymer zur Verfügung zu stellen.

Es wurde nun gefunden, daß neue Organopolysiloxane bestimmter Struktur diese erwünschten Modifizierungseigenschaften besitzen und deshalb als Modifizierungsmittel besonders geeignet sind.

Ein Gegenstand der vorliegenden Erfindung sind somit neue Organopolysiloxane mit über jeweils eine Spacergruppe end- und/oder seitenständig gebundenen Estern olefinisch ungesättigter Säuren sowie quaternären Ammoniumgruppen, welche gekennzeichnet sind durch die allgemeine durchschnittliche Formel

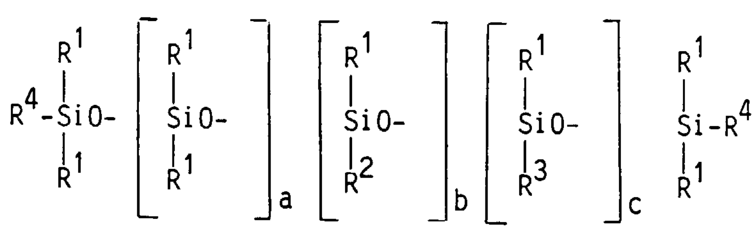

I

wobei

$R^1$ im Molekül gleich oder verschieden ist und einen Alkylrest mit 1 bis 4 Kohlenstoffatomen oder eine Phenylgruppe bedeutet, jedoch mindestens 90 % der Reste $R^1$ Methylreste sind,

$R^2$ (1) die Bedeutung des Restes $R^1$ hat oder

(2) ein Rest der allgemeinen Formel $R^5$-0-$R^6$ ist, wobei

$R^5$ ein zweiwertiger Kohlenwasserstoffrest oder Etherrest und
$R^6$ der Acylrest einer olefinisch ungesättigten Carbonsäure ist,

$R^3$ (1) die Bedeutung des Restes $R^1$ hat oder
(2) ein Rest der allgemeinen Formel $R^5$-$R^7$ ist, wobei

$R^7$ eine quaternäre Ammoniumgruppe der Formel

$$-N^+R^8R^9R^{10} \,.\, A^-$$

ist, wobei $R^8$, $R^9$ und $R^{10}$ jeweils gleich oder verschieden sind und Alkylreste mit 1 bis 18 Kohlenstoffatomen bedeuten und einer dieser Reste $R^8$, $R^9$ und $R^{10}$ je Ammoniumgruppe ein Rest $-(CH_2)_3NHCOR^{12}$ ($R^{12}$ = Alkylrest mit 7 bis 17 Kohlenstoffatomen) sein kann, und
$A^-$ ein Anion bedeutet,

$R^4$ im Molekül gleich oder verschieden ist und
(1) die Bedeutung des Restes $R^1$ oder
(2) die Bedeutung des Restes $R^5$-0-$R^6$ oder
(3) die Bedeutung des Restes $R^5$-$R^7$ hat,

mit der Maßgabe, daß im durchschnittlichen Molekül mindestens ein Rest $R^2$ ein Rest der Formel $R^5$-0-$R^6$ und mindestens ein Rest $R^3$ ein Rest der Formel $R^5$-$R^7$ ist,
a einen Wert von 0 bis 200,
b einen Wert von 1 bis 10 und
c einen Wert von 1 bis 10 hat.

Ergänzend soll zu den Resten und Indices ausgeführt werden:

$R^1$ ist ein Alkylrest mit 1 bis 4 Kohlenstoffatomen, z.B. ein Methyl-, Ethyl-, Propyl- oder Butylrest, wobei der Propyl- und der Butylrest auch verzweigt vorliegen können. Der Rest $R^1$ kann auch eine Phenylgruppe bedeuten.

Mindestens 90 % der Reste $R^1$ sind jedoch Methylreste. Besonders bevorzugt sind solche Organopolysiloxane der Formel I, bei denen alle Reste $R^1$ Methylreste sind.

Der Rest $R^2$ kann sowohl die Bedeutung des Restes $R^1$ annehmen als auch ein Rest der allgemeinen Formel $R^5$-O-$R^6$ sein. Dabei muß im durchschnittlichen Molekül mindestens ein Rest $R^2$ ein Rest der Formel $R^5$-O-$R^6$ sein. $R^5$ ist ein zweiwertiger Kohlenwasserstoffrest oder ein Etherrest. Als zweiwertiger Kohlenwasserstoffrest kommt insbesondere der Alkylenrest $-(CH_2)_x-$ in Frage, wobei x einen Wert von 1 bis 12 annehmen kann. Besonders bevorzugt hat $R^5$ die Bedeutung eines Etherrestes. Die Reste

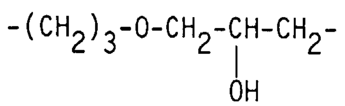 , 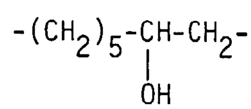 ,

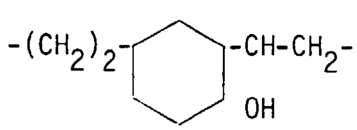 oder 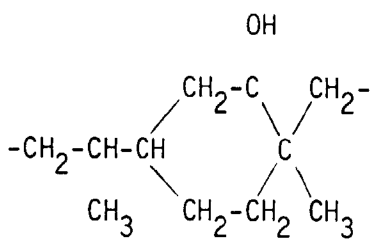

sind besonders bevorzugt.

$R^6$ ist der Acylrest einer olefinisch ungesättigten Carbonsäure, wobei der Rest $R^6$ vorzugsweise der Acylrest der Acryl-, Methacryl- oder Zimtsäure ist.

Der Rest $R^3$ kann sowohl die Bedeutung des Restes $R^1$ annehmen als auch ein Rest der allgemeinen Formel $R^5$-$R^7$ sein, wobei $R^5$ die bereits angegebene Bedeutung hat und $R^7$ eine quaternäre Ammoniumgruppe der Formel

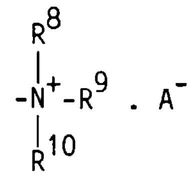

ist, wobei $R^8$, $R^9$ und $R^{10}$ jeweils gleich oder verschieden sind und Alkylreste mit 1 bis 18 Kohlenstoffatomen bedeuten und einer dieser Reste $R^8$, $R^9$ und $R^{10}$ je Ammoniumgruppe ein Rest $-(CH_2)_3NHCOR^{12}$ ($R^{12}$ = Alkylrest mit 7 bis 17 Kohlenstoffatomen) sein kann, und $A^-$ ein Anion bedeutet.

Beispiele quaternärer Ammoniumgruppen sind:

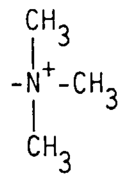

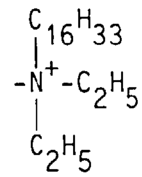

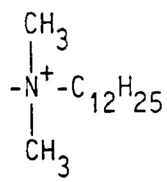

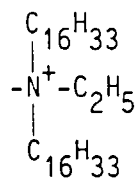

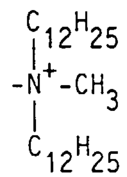

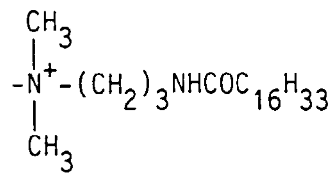

Beispiele von Anionen $A^-$ sind die Anionen anorganischer Säuren oder organischer gesättigter oder ungesättigter Säuren, wie z.B. das Chlor-, Essigsäure- und Crotonsäure-Anion.

Es muß auch für den Rest $R^3$ die Bedingung erfüllt daß mindestens ein Rest $R^3$ ein Rest der Formel $R^5$-$R^7$ ist.

Die Reste $R^2$ und $R^3$ sind im linearen Organopolysiloxan seitenständig gebunden. Es ist jedoch auch möglich, daß sich die modifizierenden Gruppen zusätzlich in $_{\alpha,\omega}$-Stellung befinden. Der Rest $R^4$ kann deshalb im Molekül gleich oder verschieden sein und die Bedeutung des Restes $R^1$ die Bedeutung des Restes $R^5$-O-$R^6$ oder die Bedeutung des Restes $R^5$-$R^7$ haben.

Die Indices a, b und c sind als Durchschnittswerte des Polymerenmoleküls anzusehen. Dabei hat a einen durchschnittlichen Wert von 0 bis 200, vorzugsweise von 0 bis 50, b hat einen durchschnittlichen Wert von 1 bis 10, vorzugsweise von 5 bis 10, c hat einen durchschnittlichen Wert von 1 bis 10, vorzugsweise von 5 bis 10.

Beispiele erfindungsgemäßer Verbindungen sind

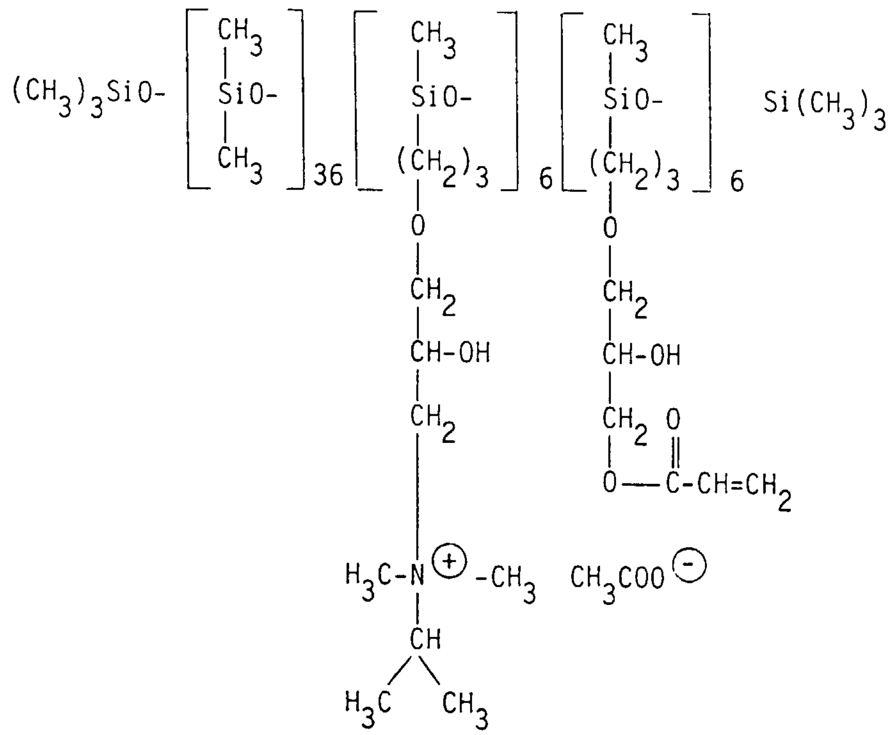

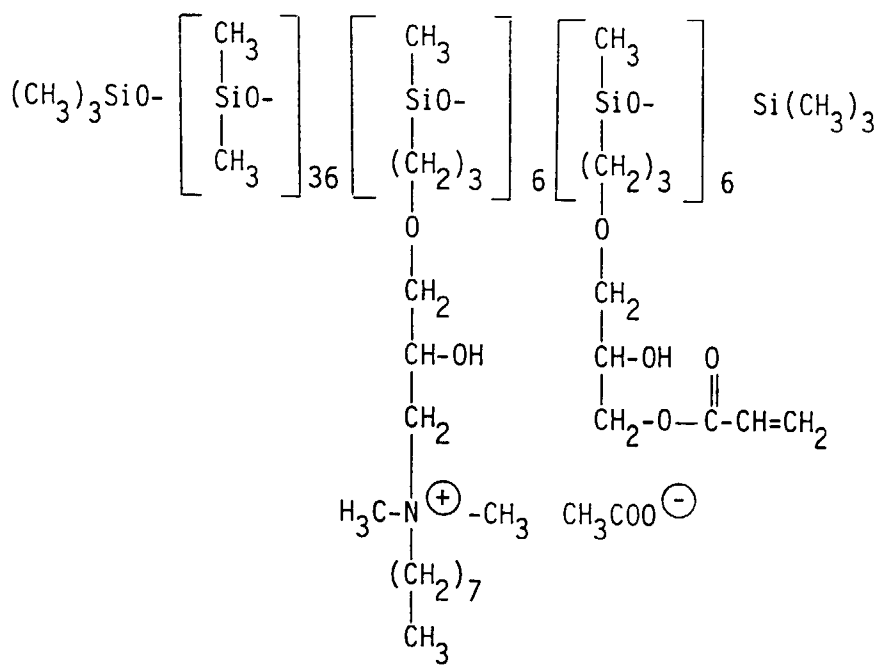

Ein weiterer Gegenstand der vorliegenden Erfindung besteht in dem Verfahren zur Herstellung der Organopolysiloxane der allgemeinen Formel I und ist dadurch gekennzeichnet, daß man ein Organopolysiloxan der allgemeinen durchschnittlichen Formel

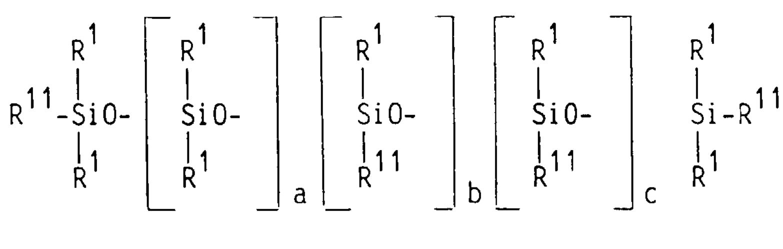

II

worin

$R^{11}$ (1) die Bedeutung des Restes $R^1$ hat oder
(2) ein Wasserstoffrest ist,

mit der Maßgabe, daß im durchschnittlichen Molekül mindestens zwei Reste $R^{11}$ Wasserstoffreste sind,

(a) mit, bezogen auf Wasserstoffreste, mindestens äquimolaren Mengen Epoxiden, welche eine olefinische Doppelbindung aufweisen, hydrosilylierend umsetzt und
(b) das erhaltene, Epoxidgruppen aufweisende Organopolysiloxan zuerst

b1) mit, bezogen auf Einheiten mit dem Index b, äquimolaren Mengen einer olefinisch ungesättigten Carbonsäure $R^6OH$ und sodann
b2) mit, bezogen auf Einheiten mit dem Index c, äquimolaren Mengen eines Ammoniumsalzes der Formel $R^{10}R^9R^8N^{\oplus}H\ A^{\ominus}$

jeweils unter öffnung des Oxiranringes in an sich bekannter Weise umsetzt.

Der Rest $R^{11}$ hat entweder die Bedeutung des Restes $R^1$ oder ist ein Wasserstoffrest, wobei im durchschnittlichen Molekül mindestens zwei Reste $R^{11}$ Wasserstoffreste sind. An diese SiH-Reste werden zunächst Epoxide, welche eine olefinische Doppelbindung aufweisen, unter den Bedingungen einer Hydrosilylierung angelagert. Bevorzugte Epoxide sind die folgenden:

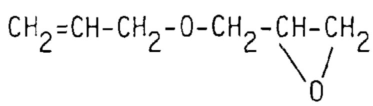

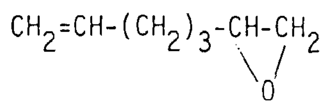

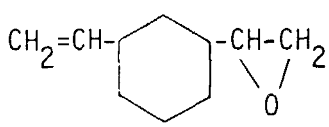

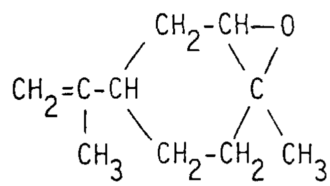

Die Hydrosilylierung verläuft zweckmäßig in Gegenwart von an sich bekannten Platinkatalysatoren, z.B. Hexachloroplatinsäure, innerhalb eines Temperaturbereiches von 20 bis 140°C, vorzugsweise von 50 bis 120°C.

Das so erhaltene, Epoxidgruppen aufweisende Organopolysiloxan wird nun in einem Verfahrensschritt mit einer olefinisch ungesättigten Carbonsäure der Formel $R^6OH$, vorzugsweise Acryl-, Methacryl- oder Zimtsäure umgesetzt. Die Umsetzung erfolgt mit, bezogen auf Einheiten mit dem Index b, äquimolaren Mengen, wobei der Oxiranring der Epoxidgruppen geöffnet wird.

Danach erfolgt die Umsetzung mit dem Ammoniumsalz der Formel $R^{10}R^9R^8N^{\oplus}H\ A^{\ominus}$ mit, bezogen auf Einheiten mit dem Index c, äquimolaren Mengen, wobei wiederum der Oxiranring der Epoxidgruppen geöffnet wird. Diese Umsetzung geschieht in Gegenwart von basischen Katalysatoren oder Übergangskatalysatoren, vorzugsweise in Gegenwart von Tetramethylguanidin oder 1,4-Diazabicyclo(2,2,2)octadien, innerhalb eines Temperaturbereiches von 80 bis 140°C, vorzugsweise von 90 bis 130°C.

Es ist natürlich möglich, die Carbonsäuren bzw. Ammoniumsalze in größeren als jeweils äquimolaren Mengen einzusetzen. Dies ist aber nur dann sinnvoll, wenn nach vollständigem Umsatz der Epoxidgruppen die überschüssigen Mengen an Reaktionspartnern aus dem Gemisch entfernt werden können oder beim Verbleib im Reaktionsprodukt nicht stören.

Das gesamte Verfahren kann in Gegenwart eines Lösungsmittels durchgeführt werden. Dabei kommen als Lösungsmittel insbesondere Toluol oder Cyclohexan in Frage. Die Anwesenheit von Lösungsmitteln ist jedoch nicht zwingend erforderlich.

Ein weiterer Gegenstand der vorliegenden Erfindung ist die Verwendung der erfindungsgemäßen Verbindungen zur Einstellung des Releaseverhaltens abhäsiver Beschichtungen auf Basis strahlenhärtender Polymere. Beispiele solcher strahlenhärtender Polymere sind Polysiloxane, welche bevorzugt über SiC-Gruppen gebundene (Meth)acrylsäureestergruppen aufweisen. Durch den Zusatz wirksamer Mengen der erfindungsgemäßen Modifizierungsmittel, und zwar insbesondere Mengen von 1 bis 50 Gew.-%, bezogen auf die Gesamtzubereitung, wird das Releaseverhalten der Basispolymeren gezielt verringert. Der Grad der Verringerung läßt sich in verschiedener Weise beeinflussen: Von

Einfluß ist die Art und Menge der Reste $R^5$-O-$R^6$ und $R^5$-$R^7$, wobei mit steigendem Gehalt an $R^5$-O-$R^6$-Resten die Abhäsivität der Basispolymeren zunehmend verringert wird.

Der Rest $R^5$-$R^7$ verleiht der ausgehärteten Beschichtungsmasse zusätzlich antistatische Eigenschaften.

Eine wesentliche Bedeutung kommt der Konzentration des erfindungsgemäßen Organopolysiloxans in dem zu modifizierenden Basismaterial zu. Mit steigendem Gehalt an dem erfindungsgemäßen Organopolysiloxan in dem zu modifizierenden Basismaterial nimmt die Abhäsivität der ausgehärteten Beschichtungsmasse zu und der Trennwert steigt an.

Das Releaseverhalten läßt sich zusätzlich beeinflussen durch die Funktionalität der Siloxancopolymeren, d.h. dem Verhältnis zwischen reaktiven (Meth)acrylatgruppen und Aminoquatgruppen. So nimmt die Abhäsivität ebenso wie die Vernetzungsdichte mit steigender Konzentration an (Meth)acrylatgruppen im Molekül zu. Mit steigendem Gehalt an Aminoquatgruppen verbessert sich die Verträglichkeit mit dem Untergrund, d.h. die Haftung nimmt zu.

Auch durch die Alkylsubstituenten $R^8$-$R^{10}$ am N-Atom kann das abhäsive Verhalten zusätzlich beeinflußt werden. Dabei zeigt sich, daß mit zunehmender Kettenlänge der Alkylreste $R^8$-$R^{10}$ auch das abhäsive Verhalten der ausgehärteten Beschichtungsmasse erhöht wird.

Hierdurch wird dem Fachmann verständlich, daß die erfindungsgemäßen Organopolysiloxane zahlreiche Möglichkeiten bieten, die abhäsive Beschichtung mit dem chemischen Charakter der eingesetzten Klebstoffe abzustimmen und deshalb in besonderer Weise dazu geeignet sind, dem jeweiligen Verwendungszweck angepaßt zu werden.

Die erfindungsgemäßen Verbindungen eignen sich aufgrund ihrer Struktur auch für viele andere Zwecke, wie z. B. als Additive für Lacke und für Wachs enthaltende Zubereitungen, wie Pflegemittel für lackierte Oberflächen (Autopolituren). Sie erleichtern den gleichmäßigen Auftrag der Pflegemittel, erhöhen deren Glanz und verbessern die Waschbeständigkeit der Wachsschichten. Die erfindungsgemäßen Verbindungen sind wegen ihrer quaternären Ammoniumgruppen auch als Antistatika verwendbar.

In den folgenden Beispielen wird die Herstellung der erfindungsgemäßen Organopolysiloxane beschrieben. Es werden ferner die modifizierenden Eigenschaften dieser Verbindungen beschrieben, insbesondere die Beeinflussung der Abhäsivität der ausgehärteten Beschichtungsmasse, sowie weitere anwendungstechnisch bedeutsame Eigenschaften.

Beispiel 1

356,0 g (0,1 Mol) eines seitenständig SiH-funktionalisierten Polydimethylsiloxans der allgemeinen Formel

$$(CH_3)_3SiO-\left[\begin{matrix} CH_3 \\ | \\ SiO- \\ | \\ CH_3 \end{matrix}\right]_{36}\left[\begin{matrix} CH_3 \\ | \\ SiO- \\ | \\ H \end{matrix}\right]_{12} Si(CH_3)_3$$

und mittleren Gesamtkettenlänge N = 50 werden mit 100 ml Toluol und 4 mg (= 20 ppm Pt) Hexachloroplatinsäure $H_2ptCl_6$ in einem 800-ml-Vierhalskolben, ausgestattet mit Rührer, Tropftrichter, Thermometer und Rückflußkühler, vorgelegt und unter Rühren auf 110°C aufgeheizt. Bei dieser Temperatur werden 136,8 g (1,2 Mol) Allylglycidether derart zugetropft, daß trotz einsetzender exothermer Reaktion eine Temperatur von 130°C nicht überschritten wird. Nach beendeter Zugabe wird die Reaktionsmischung noch 1 bis 2 Stunden weiter bei 110°C gerührt, bis die Umsatzkontrolle über den SiH-Wert zeigt, daß der Allylglycidether vollständig hydrosilylierend angelagert worden ist. Bei einem Umsatz von > 99 % wird die Reaktion abgebrochen und die Pt-Katalysatorreste aus der Reaktionsmischung durch Filtration entfernt. Durch Destillation im Ölpumpenvakuum werden der Überschuß an Allylglycidether sowie Lösungsmittel und flüchtige Nebenprodukte entfernt.

49,1 g (0,01 Mol) des so hergestellten Epoxysiloxans werden unter Zugabe von 0,2 g Tetramethylguanidin als basischem Katalysator auf 80°C aufgeheizt. Bei dieser Temperatur werden langsam 4,3 g (0,06 Mol) Acrylsäure zugetropft und die Reaktionstemperatur auf 120°C erhöht. Bei dieser Temperatur wird das Reaktionssystem solange gehalten, bis eine Umsatzkontrolle über den Säurewert zeigt, daß keine freie Acrylsäure mehr vorhanden ist. Das epoxid- und acrylatfunktionelle Siloxan-copolymer-Reaktionsprodukt entspricht nach den Analysenergebnissen der zu erwartenden mittleren Zusammensetzung

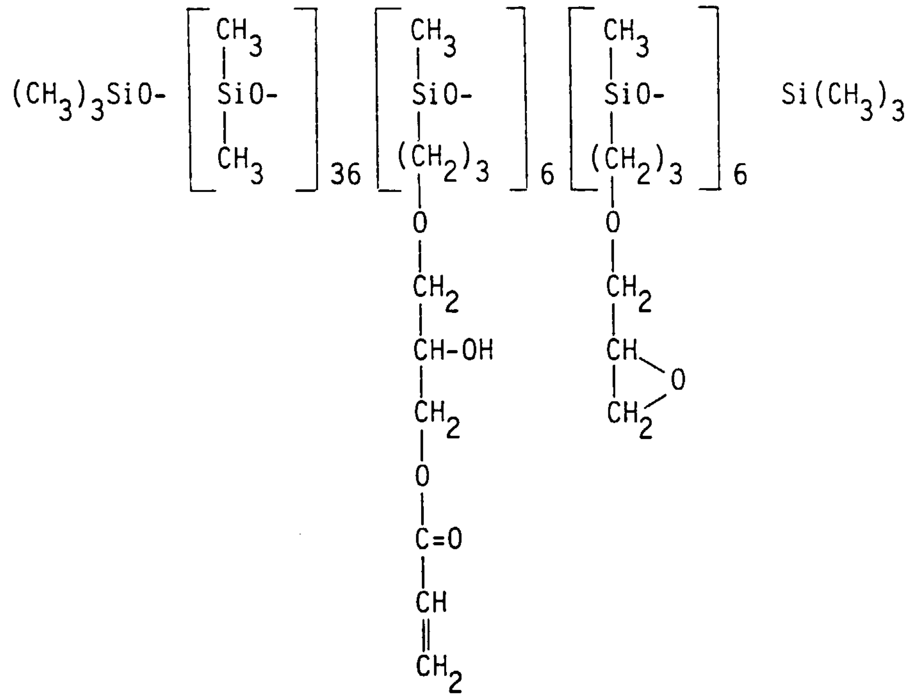

und weist neben den Acrylsäureestergruppen zusätzlich den theoretischen Restgehalt von Epoxidgruppen auf.

Beispiel 2

Zu einer Mischung von 5,43 g Dimethylisopropylamin (0,063 Mol), 3,0 g Essigsäure und 15,0 g Wasser werden bei einer Temperatur von 50°C 53,5 g (0,01 Mol) des in Beispiel 1 beschriebenen epoxid- und acrylatfunktionellen Siloxancopolymeren über einen Zeitraum von 2 Stunden zugetropft und nach Zugabe von 20 g Isopropanol eine weitere Stunde bei dieser Temperatur gerührt. Dann wird das Reaktionsgemisch aufgeheizt und 5 Stunden unter Rückfluß gekocht. Die klare Lösung wird mittels Destillation im Ölpumpenvakuum von Lösungsmittel und flüchtigen Nebenprodukten befreit. Das Reaktionsprodukt, ein acrylatfunktionelles Aminoquatpolydimethylsiloxan ist eine klar-gelbe, viskose Flüssigkeit und entspricht nach erfolgter Analyse der theoretischen mittleren Formel

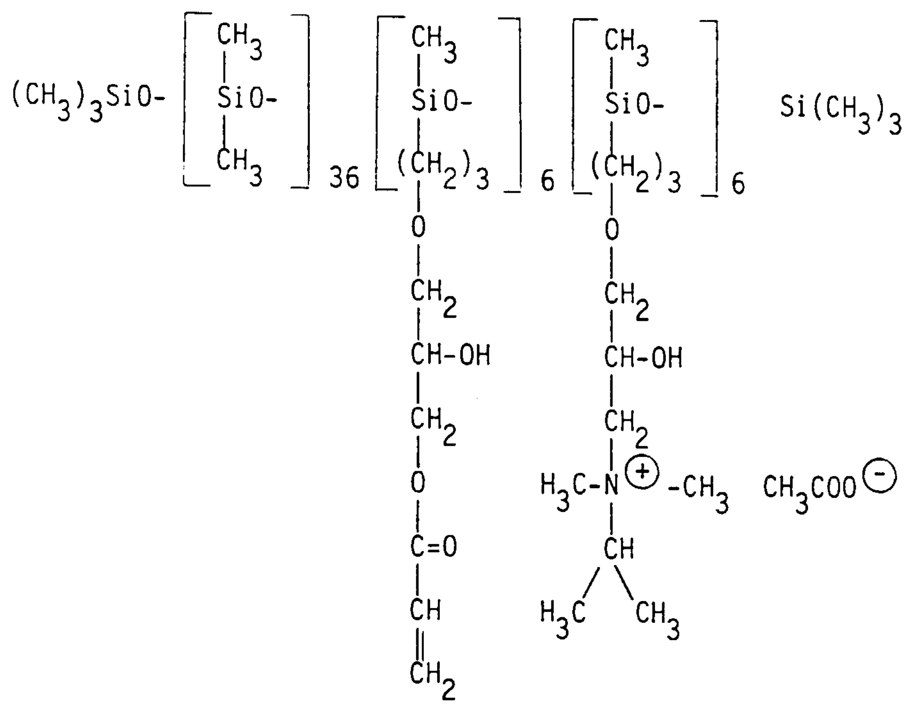

Beispiel 3

In analoger Weise, wie in Beispiel 2 dargestellt, werden 53,5 g des in Beispiel 1 hergestellten acrylatfunktionellen Epoxysiloxans quaternisiert. Dabei wird allerdings das verwendete Amin variiert und 8,64 g (0,055 Mol) Dimethyl-n-octylamin zur Quaternisierung verwendet. Das Produkt entspricht der Formel

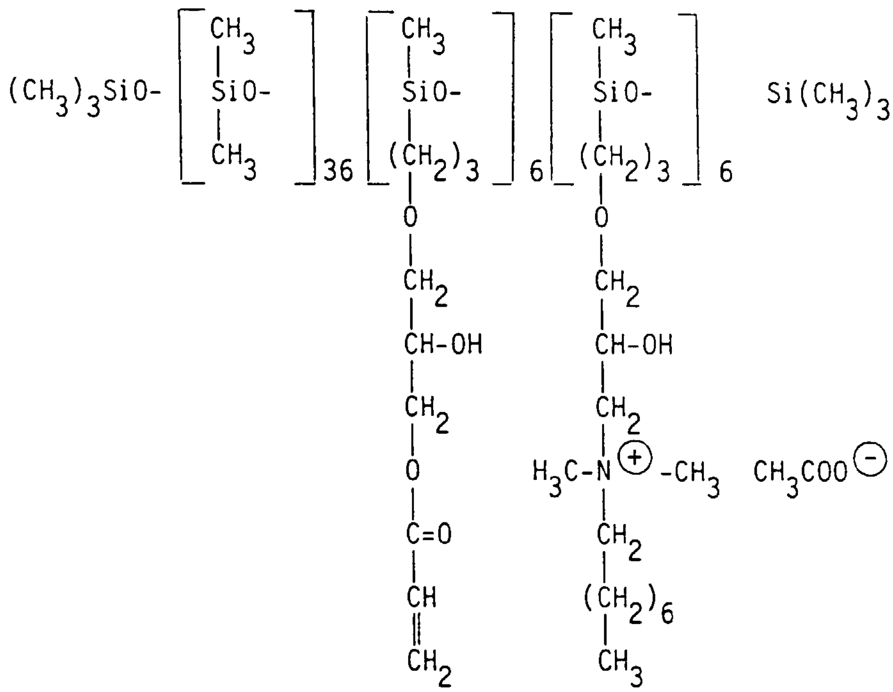

Beispiel 4

Analog wie in Beispiel 1 beschrieben, wird durch Variation der bei der Derivatisierung eingesetzten Acrylsäuremenge ein teilweise acrylatfunktionelles Epoxysiloxan der mittleren Zusammensetzung

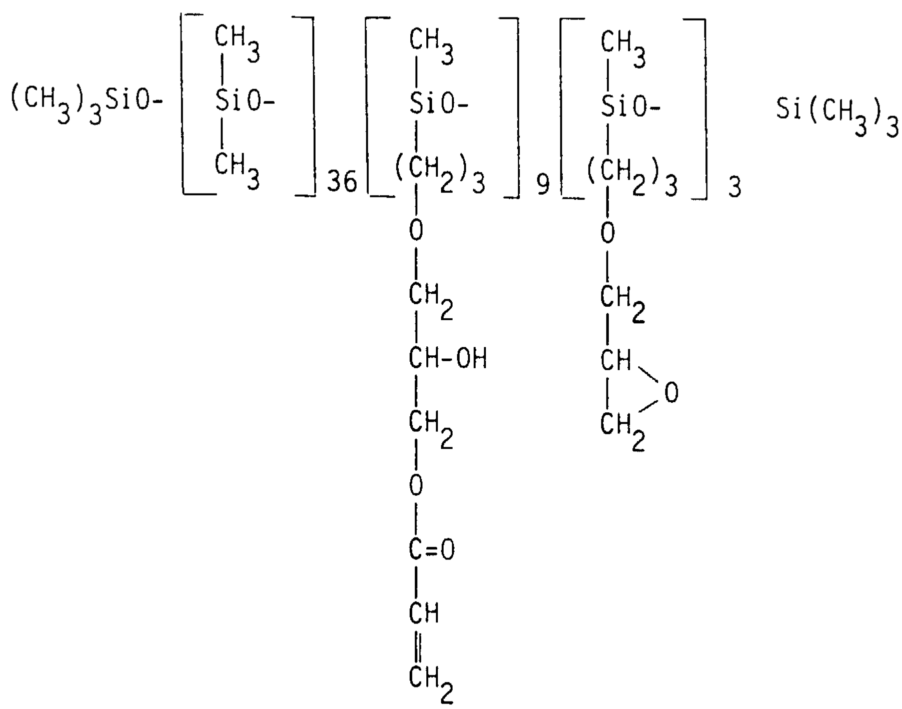

hergestellt. Daran anschließend wird dieses Material mittels der in Beispiel 2 beschriebenen Methode mit Dimethylisopropylamin zu dem entsprechenden acrylatfunktionellen Dimethylisopropylaminoquatsiloxan der Formel

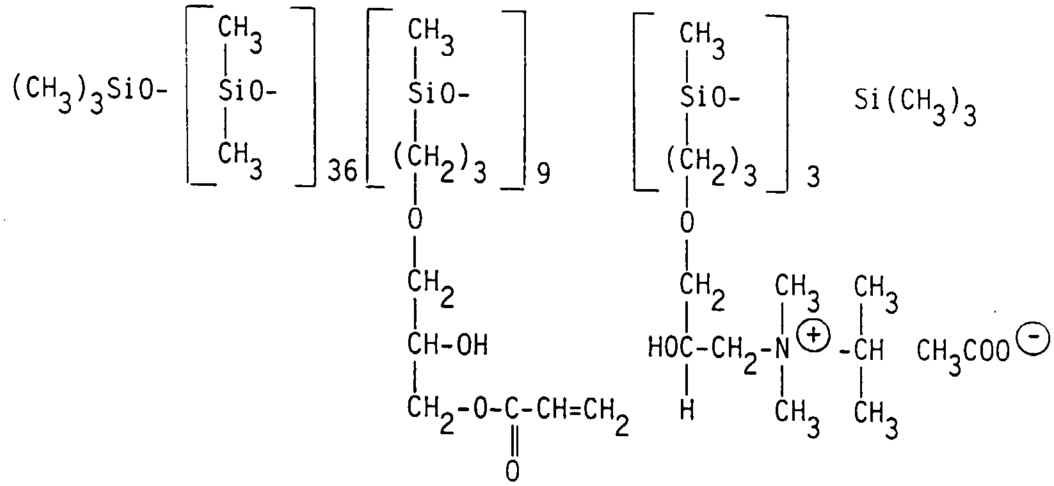

umgesetzt.

Beispiel 5

In analoger Weise, wie in den vorangegangenen Beispielen ausführlich dargestellt, wird das acrylatfunktionelle Epoxysiloxan

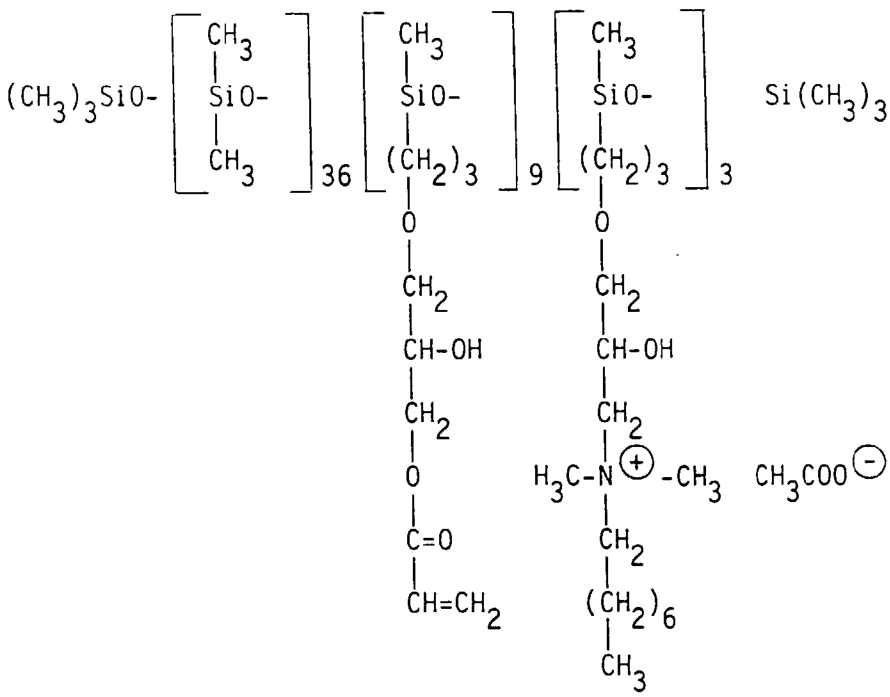

mit Dimethyl-n-octylamin zum entsprechenden Dimethyl-n-octylaminoquatsiloxan umgesetzt.

Anwendungstechnische Prüfungen

Zur Überprüfung der anwendungstechnischen Eigenschaften der erfindungsgemäßen modifizierten Polydimethylsiloxane werden die Produkte der Beispiele 2 bis 5 in jeweils 10 und 25 %iger Abmischung mit einem acrylatfuntkionellen Polydimethylsiloxan der Formel

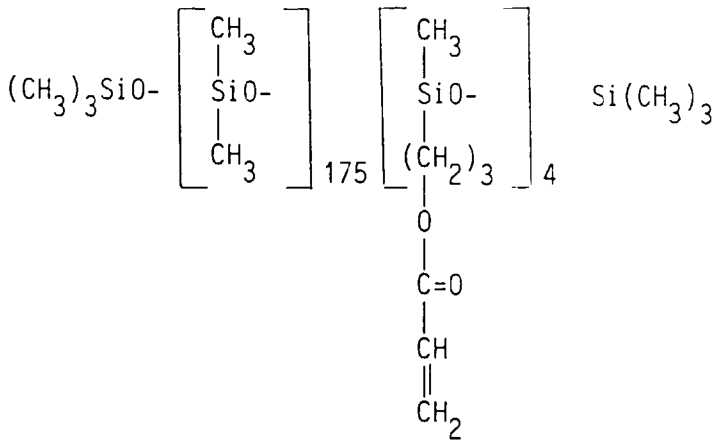

verwendet und auf einen flächigen Träger (satiniertes Papier) in einer Menge von 1,0 g/m$^2$ aufgetragen und durch Einwirkung von 2 Mrad Elektronenstrahlen gehärtet. Zur Messung der Abhäsivität werden zwei jeweils 30 mm breite Testklebebänder der Fa. Beiersdorf verwendet, ein mit Acrylatkleber beschichtetes Material Tesa ® 7475 und ein Kautschukklebeband Tesa ® 7476. Die Messung der Trennwerte erfolgt durch Aufkleben der Testklebebänder auf das beschichtete Substrat und nachfolgender Lagerung bei erhöhter Temperatur. Nach einem Tag Lagerzeit wird die benötigte Trennkraft gemessen, die erforderlich ist, um das Klebeband in einem Schälwinkel von 180° vom Untergrundmaterial abzuziehen.

| Zusatz Aminoquatacrylatsiloxan | Konzentration [Gew.-%] | Trennkraft [cN/inch] | |
|---|---|---|---|
| | | Tesa® 7475 | Tesa® 7476 |
| - (Blindwert) | - | 15 | 31 |
| Siloxan Bsp. 2 | 10 | 27 | 44 |
| | 25 | 234 | 471 |
| Siloxan Bsp. 3 | 10 | 47 | 93 |
| | 25 | 251 | 512 |
| Siloxan Bsp. 4 | 10 | 90 | 207 |
| | 25 | 314 | 600 |
| Siloxan Bsp. 5 | 10 | 134 | 289 |
| | 25 | 354 | 673 |

Aus der Tabelle ergibt sich, daß die erfindungsgemäßen modifizierten Organopolysiloxane die gewünschten anwendungstechnischen Eigenschaften zeigen.

**Patentansprüche**

**1.** Organopolysiloxane mit über jeweils eine Spacergruppe end- und/oder seitenständig gebundenen Estern olefinisch ungesättigter Säuren sowie quaternären Ammoniumgruppen, gekennzeichnet durch die allgemeine durchschnittliche Formel

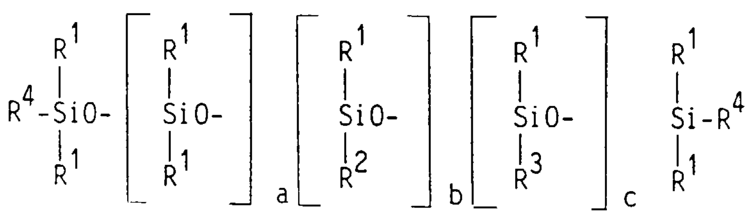

wobei

$R^1$ im Molekül gleich oder verschieden ist und einen Alkylrest mit 1 bis 4 Kohlenstoffatomen oder eine Phenylgruppe bedeutet, jedoch mindestens 90 % der Reste $R^1$ Methylreste sind,

$R^2$ (1) die Bedeutung des Restes $R^1$ hat oder
(2) ein Rest der allgemeinen Formel $R^5$-0-$R^6$ ist, wobei

$R^5$ ein zweiwertiger Kohlenwasserstoffrest oder Etherrest und
$R^6$ der Acylrest einer olefinisch ungesättigten Carbonsäure ist,

$R^3$ (1) die Bedeutung des Restes $R^1$ hat oder
(2) ein Rest der allgemeinen Formel $R^5$-$R^7$ ist, wobei

$R^7$ eine quaternäre Ammoniumgruppe der Formel

$$-N^+R^8R^9R^{10} \; . \; A^-$$

ist, wobei $R^8$, $R^9$ und $R^{10}$ jeweils gleich oder verschieden sind und Alkylreste mit 1 bis 18 Kohlenstoffatomen bedeuten und einer dieser Reste $R^8$, $R^9$ und $R^{10}$ je Ammoniumgruppe ein Rest $-(CH_2)_3NHC0R^{12}$ ($R^{12}$ = Alkylrest mit 7 bis 17 Kohlenstoffatomen) sein kann, und
$A^-$ ein Anion bedeutet,

$R^4$ im Molekül gleich oder verschieden ist und
(1) die Bedeutung des Restes $R^1$ oder
(2) die Bedeutung des Restes $R^5$-O-$R^6$ oder
(3) die Bedeutung des Restes $R^5$-$R^7$ hat,

mit der Maßgabe, daß im durchschnittlichen Molekül mindestens ein Rest $R^2$ ein Rest der Formel $R^5$-O-$R^6$ und mindestens ein Rest $R^3$ ein Rest der Formel $R^5$-$R^7$ ist,

a einen Wert von 0 bis 200,
b einen Wert von 1 bis 10 und
c einen Wert von 1 bis 10 hat.

**2.** Organopolysiloxane nach Anspruch 1, dadurch gekennzeichnet, daß der Rest $R^5$ einer der Reste

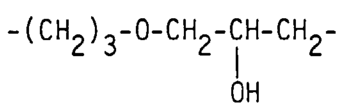 , 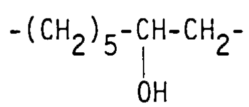 ,

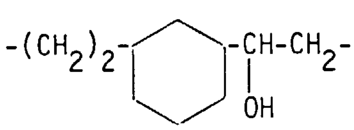 oder 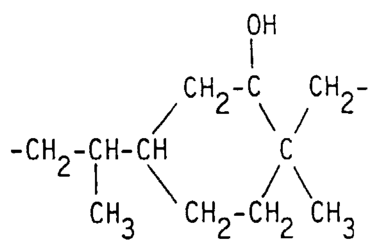

ist.

**3.** Organopolysiloxane nach Anspruch 1, dadurch gekennzeichnet, daß der Rest $R^6$ der Acylrest der Acryl-, Methacryl- oder Zimtsäure ist.

**4.** Verfahren zur Herstellung der Organopolysiloxane nach einem oder mehreren der vorhergehenden Ansprüche, dadurch gekennzeichnet, daß man ein Organopolysiloxan der allgemeinen durchschnittlichen Formel

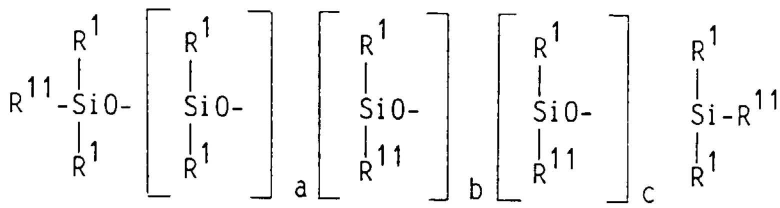

worin

$R^{11}$ (1) die Bedeutung des Restes $R^1$ hat oder
(2) ein Wasserstoffrest ist,

mit der Maßgabe, daß im durchschnittlichen Molekül mindestens zwei Reste $R^{11}$ Wasserstoffreste sind,

(a) mit, bezogen auf Wasserstoffreste, mindestens äquimolaren Mengen Epoxiden, welche eine olefinische Doppelbindung aufweisen, hydrosilylierend umsetzt und
(b) das erhaltene, Epoxidgruppen aufweisende Organopolysiloxan zuerst

b1) mit, bezogen auf Einheiten mit dem Index b, äquimolaren Mengen einer olefinisch ungesättigten Carbonsäure $R^6OH$ und sodann
b2) mit, bezogen auf Einheiten mit dem Index c, äquimolaren Mengen eines Ammoniumsalzes der Formel

$$R^{10}R^9R^8N^{\oplus}H\ A^{\ominus}$$

jeweils unter öffnung des Oxiranringes in an sich bekannter Weise umsetzt.

**5.** Verfahren nach Anspruch 4, dadurch gekennzeichnet, daß man die Hydrosilylierung in Gegenwart von Platinkatalysatoren und die Umsetzung mit den Epoxidgruppen in Gegenwart von basischen Katalysatoren oder Übergangskatalysatoren durchführt.

**6.** Verwendung der Verbindungen des Anspruchs 1 zur Einstellung des Releaseverhaltens abhäsiver Beschichtungen auf Basis strahlenhärtender Polymere.

## Claims

**1.** Organopolysiloxanes with esters of olefinically unsaturated acids attached terminally and/or laterally via a spacer group in each case and with quaternary ammonium groups, characterized by the general average formula

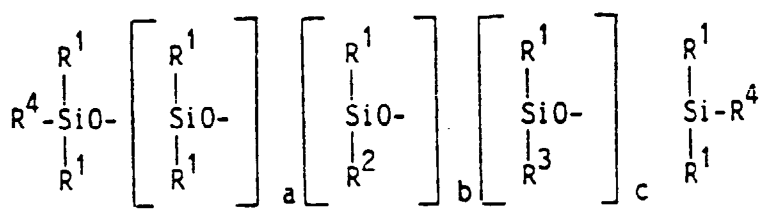

in which

each $R^1$ in the molecule is identical or different and is an alkyl radical having 1 to 4 carbon atoms or a phenyl group, but at least 90% of the radicals $R^1$ are methyl radicals,
$R^2$ (1) has the meaning of the radical $R^1$ or
(2) is a radical of the general formula $R^5$-O-$R^6$, where
$R^5$ is a divalent hydrocarbon radical or ether radical and
$R^6$ is the acyl radical of an olefinically unsaturated carboxylic acid,
$R^3$ (1) has the meaning of the radical $R^1$ or
(2) is a radical of the general formula $R^5$-$R^7$, where

$R^7$ is a quaternary ammonium group of the formula

$$-N^+R^8R^9R^{10}.A^-,$$

in which $R^8$, $R^9$ and $R^{10}$ are each identical or different and are alkyl radicals having 1 to 18 carbon atoms and one of these radicals $R^8$, $R^9$ and $R^{10}$ per ammonium group can be a radical $-(CH_2)_3NHCOR^{12}$ ($R^{12}$ = alkyl radical having 7 to 17 carbon atoms), and
$A^-$ is an anion,

each $R^4$ in the molecule is identical or different and
(1) has the meaning of the radical $R^1$ or
(2) has the meaning of the radical $R^5$-O-$R^6$ or
(3) has the meaning of the radical $R^5$-$R^7$,

with the proviso that in the average molecule at least one radical $R^2$ is a radical of the formula $R^5$-O-$R^6$ and at least one radical $R^3$ is a radical of the formula $R^5$-$R^7$,

a has a value from 0 to 200,
b has a value from 1 to 10 and
c has a value from 1 to 10.

2. Organopolysiloxanes according to Claim 1, characterized in that the radical $R^5$ is one of the radicals

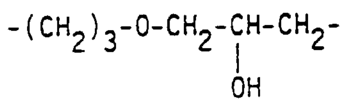 ,

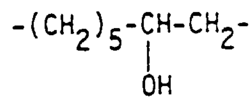 ,

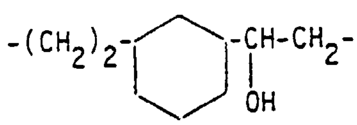

or

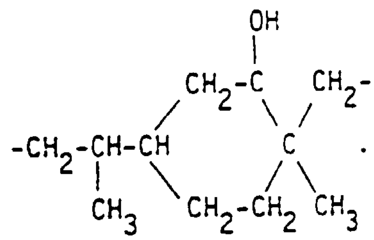 .

3. Organopolysiloxanes according to Claim 1, characterized in that the radical $R^6$ is the acyl radical of acrylic, methacrylic or cinnamic acid.

4. Process for the preparation of the organopolysiloxanes according to one or more of the preceding claims, characterized in that an organopolysiloxane of the general average formula

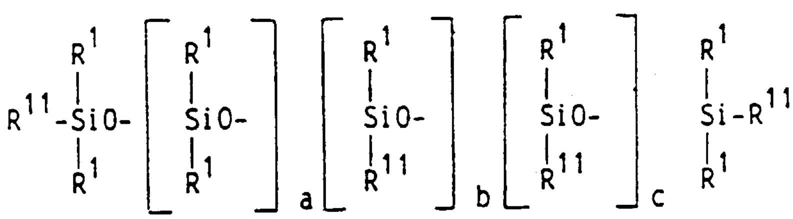

in which

$R^{11}$ (1) has the meaning of the radical $R^1$ or
(2) is a hydrogen atom,

with the proviso that in the average molecule at least two radicals $R^{11}$ are hydrogen atoms,

(a) is subjected to a hydrosilylation reaction with, based on hydrogen atoms, at least equimolar quantities of epoxides which have an olefinic double bond, and
(b) the epoxide group-containing organopolysiloxane obtained is reacted first

b1) with, based on units having the index b, equimolar quantities of an olefinically unsaturated carboxylic acid $R^6OH$, and then

b2) with, based on units having the index c, equimolar quantities of an ammonium salt of the formula

$$R^{10}R^9R^8N^{\oplus}H\ A^{\ominus},$$

in a manner known per se, in each case with opening of the oxirane ring.

**5.** Process according to Claim 4, characterized in that the hydrosilylation is carried out in the presence of platinum catalysts and the reaction with the epoxide groups is carried out in the presence of basic catalysts or transition catalysts.

**6.** The use of the compounds of Claim 1 for adjusting the release properties of abhesive coatings based on radiation-curing polymers.

## Revendications

**1.** Organopolysiloxanes avec des esters d'acides oléfiniquement insaturés reliés à chaque fois en position terminale et/ou latérale par l'intermédiaire d'un groupe d'espacement ainsi qu'avec des groupes d'ammonium quaternaire, caractérisés par la formule générale moyenne :

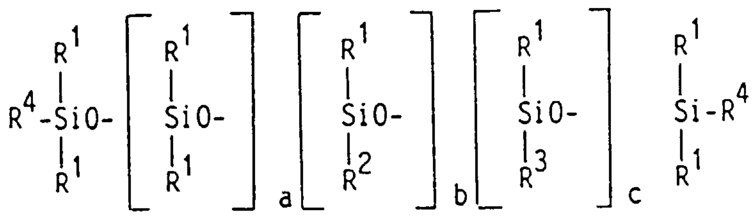

où

$R^1$ sont identiques ou différents dans la molécule et signifient un reste alkyle ayant de 1 à 4 atomes de carbone ou le groupe phényle, au moins 90 % des restes $R^1$ signifiant toutefois le reste méthyle,

$R^2$ (1) a la signification du reste $R^1$ ou
(2) est un reste répondant à la formule générale $R^5$-O-$R^6$ où

$R^5$ est un reste hydrocarboné bivalent ou un reste éther et
$R^6$ est le reste acyle d'un acide carboxylique oléfiniquement insaturé,

$R^3$ (1) a la signification du reste $R^1$ ou
(2) est un reste répondant à la formule générale $R^5$-$R^7$ où

$R^7$ est un groupe d'ammonium quaternaire répondant à la formule $-N^+R^8R^9R^{10}.A^-$
où $R^8$, $R^9$ et $R^{10}$ sont identiques ou différents et signifient des restes alkyles ayant de 1 à 18 atomes de carbone, et un de ces restes $R^8$, $R^9$ et $R^{10}$ de chaque groupe d'ammonium peut être un reste $-(CH_2)_3NHCOR^{12}$ ($R^{12}$ = un reste alkyle ayant de 7 à 17 atomes de carbone), et
$A^-$ signifie un anion,

$R^4$ sont identiques ou différents dans la molécule et
(1) ont la signification du reste $R^1$ ou
(2) ont la signification du reste $R^5$-O-$R^6$ ou
(3) ont la signification du reste $R^5$-$R^7$,

avec la condition que, dans la molécule moyenne, au moins un reste $R^2$ soit un reste répondant à la formule $R^5$-O-$R^6$, et au moins un reste $R^3$ soit un reste répondant à la formule $R^5$-$R^7$,

a vaut de 0 à 200,
b vaut de 1 à 10, et

c vaut de 1 à 10.

**2.** Organopolysiloxanes selon la revendication 1, caractérisés en ce que le reste $R^5$ est un des restes

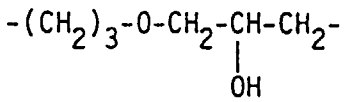

,

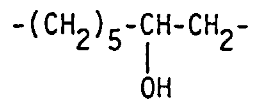

,

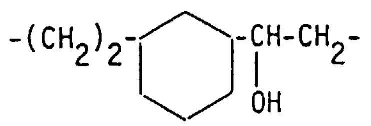

ou

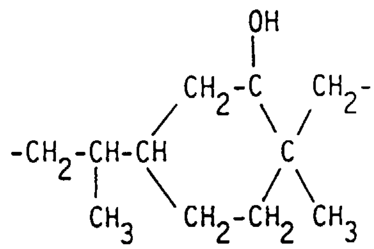

**3.** Organopolysiloxanes selon la revendication 1, caractérisés en ce que le reste $R^6$ est le reste acyle de l'acide acrylique, méthacrylique ou cinnamique.

**4.** Procédé de préparation des organopolysiloxanes selon l'une ou plusieurs des revendications précédentes, caractérisé en ce qu'on effectue l'hydrosilylation d'un organopolysiloxane répondant à la formule générale moyenne

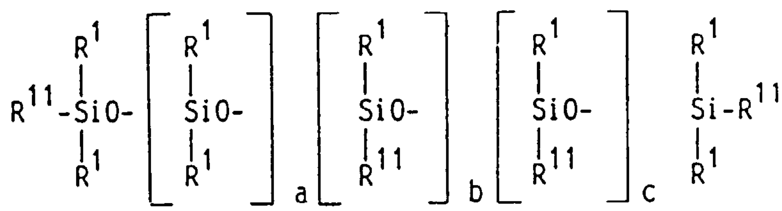

où

$R^{11}$ (1) a la signification du reste $R^1$ ou
(2) est un reste d'hydrogène,

avec la condition qu'au moins deux restes $R^{11}$ soient des restes d'hydrogène dans la molécule moyenne,

(a) avec des quantités au moins équimolaires, par rapport aux restes d'hydrogène, d'époxydes qui présentent une double liaison oléfinique,
(b) on fait réagir, d'une manière connue en soi, l'organopolysiloxane obtenu contenant des groupes époxydes

b1) d'abord avec un acide carboxylique $R^6OH$ oléfiniquement insaturé, en des quantités équimolaires par rapport aux unités avec l'indice b, et ensuite
b2) avec un sel d'ammonium de formule $R^{10}R^9R^8N^{\oplus}$ H $A^{\ominus}$, en des quantités équimolaires par rapport aux unités avec l'indice c,

à chaque fois avec ouverture du cycle d'oxiranne.

**5.** Procédé selon la revendication 4, caractérisé en ce qu'on effectue l'hydrosilylation en présence de catalyseurs au platine et on effectue la réaction avec les groupes époxydes en présence de catalyseurs basiques ou de catalyseurs de transition.

**6.** Utilisation des composés de la revendication 1 pour ajuster le comportement de séparation de revêtements anti-adhésifs à base de polymères durcissant par rayonnement.